Europäisches Patentamt

(19) European Patent Office

Office européen des brevets

(11) Publication number: **0 099 180**
**B1**

(12) **EUROPEAN PATENT SPECIFICATION**

(45) Date of publication of patent specification: **19.08.87**

(51) Int. Cl.⁴: **F 16 C 32/06**

(21) Application number: **83303376.4**

(22) Date of filing: **10.06.83**

(54) Fluid bearings.

(30) Priority: **11.06.82 GB 8217026**

(43) Date of publication of application:
**25.01.84 Bulletin 84/04**

(45) Publication of the grant of the patent:
**19.08.87 Bulletin 87/34**

(84) Designated Contracting States:
**CH DE FR GB IT LI**

(56) References cited:
**GB-A-1 027 395**
**GB-A-1 073 981**
**US-A-3 062 593**

(73) Proprietor: **NATIONAL RESEARCH
DEVELOPMENT CORPORATION
101 Newington Causeway
London SE1 6BU (GB)**

(72) Inventor: **Mohsin, Mohammed Ezzat
14 Frampton Close
Alkrington Manchester M24 1EY (GB)**

(74) Representative: **Stables, Patrick Antony
Patent Department National Research
Development Corporation 101 Newington
Causeway
London SE1 6BU (GB)**

EP 0 099 180 B1

Courier Press, Leamington Spa, England.

## Description

This invention relates to fluid bearings, by which we mean bearings between two parts which must be capable of relative motion and which must not touch. A recess or pad is formed in one of the members and is connected to a source of fluid under pressure, and the necessary clearance between the two bearing members is maintained by fluid escaping from this pad, which will be referred to as a main or load-bearing pad, to exhaust by way of a shallow clearance between the second bearing member and the border or "land" surrounding the pad.

The invention relates especially to fluid bearings in which a load-bearing pad is associated with a smaller pilot pad connected to the fluid source. The flow of fluid from the source to the load-bearing pad is regulated not by the conditions prevailing at the pad but by changes of pressure, clearance or the like sensed at the pilot pad. It is known that such bearings can offer advantages, for example, as to stiffness and fluid economy, compared with fluid bearings comprising main pads only.

In certain fluid bearings, for instance journal bearings, high relative speed occurs between the stationary and moving bearing members. In a typical hydrostatic journal bearing to support a shaft rotating at high speed, opposed main bearing pads confronting the shaft are formed at angular intervals and in a common radial plane in the housing surrounding the shaft, and power has to be expended to overcome shearing friction of the bearing fluid in two places in particular. Firstly, under the lands through which the fluid from the pads must pass as a thin film through the bearing clearance in order to reach exhaust. Secondly within the pads themselves, where because of the frictional drag set up by the relative movement of the bearing members circulatory motion may be set up, so leading to shearing between oppositely-moving layers of fluid in contact with each other. The work done in overcoming this friction manifests itself largely as heat, so that the fluid in the vicinity of the pads becomes hotter than at the source. This heat can lead to harmful effects which diminish the accuracy of all fluid bearings, especially of fluid bearings of sophisticated type that are constructed so as to maintain constant bearing clearance despite variations in bearing load.

One such design of bearing, capable of maintaining constant clearance between the bearing members despite variations in load, is described in GB—A—1027395 and one figure of that patent is now essentially reproduced as Figure 1 of the drawings accompanying the present application. It is a diagrammatic section taken in a transverse plane through a longitudinal slideway bearing and associated fluid circuitry, and shows a main load-bearing pad 64 formed in one member 63a of the bearing, confronting a surface 62 of the other member 62a. Attached to member 63a is a bar 67 formed with a smaller pad 70, and confronting another bar 65 carried by member 62a. Bars 65 and 67 and pad 70 serve as the pilot bearing for main pad 64. Pilot pad 70 is connected to a pressure fluid source 108 by way of an automatic regulating valve 106 including a diaphragm 107, and an equalising valve 72 ensures that the pressure existing in pilot pad 70 (communicated to valve 72 by way of lines 105 and 71) is matched by an equal pressure supplied from source 108 through valve 72 and line 79 to pad 64. As UK Patent No. 1027395 explains in detail, the characteristics of valve 106, in which fluid from a pressure fluid source 108 has to force its way through the annular clearance between the clean-cut end of a cylindrical inlet conduit and a confronting plane spring diaphragm 107 located in a radial plane and with a pre-set spring bias against axial deflection, enables the bearing clearance to be maintained adequately constant despite variations of bearing load. Any tendency for the pilot bearing clearance to fall in response to increased load is at once reflected in a rise in pressure within pad 70, due to increased flow resistance of the clearance. This in turn is transmitted to equalising valve 72 by way of line 71 so ensuring that flow of fluid from source 108 through valve 72 direct to main load-bearing pad 64 is adjusted to create the same higher pressure within that pad. Bearing members 62a, 63a are thus forced apart again to re-seek the pilot bearing equilibrium condition corresponding to the pre-set bias of valve 106.

It should be particularly noted that the pilot bearing is said in UK No. 1027395 to comprise two bars 65 and 67, presenting accurately flat surfaces 66 and 68 which register with one another. The clear teaching of this description, and of the accompanying drawings, is that the clearances to either side of pad 70 have appreciable width, just as have the clearances to either side of the main load-carrying pad 64. In UK No. 1027395 there is no teaching to the contrary, nor was there any reason for any such teaching. The relatively high resistance of a clearance of such width minimises the rate at which the source must deliver fluid, and leads to no practical disadvantages in a bearing of the kind described in UK No. 1027395 in which the two members 62a, 63a move back and forth relative to each other in a linear direction, without any suggestion of ever achieving high relative speed.

Were there such high relative speed between members 62a and 63a, however, as could be the case in an equivalent journal bearing in which 62a was a fast-spinning shaft and 63a the surrounding housing, then the work required to overcome the shearing friction mentioned in the second paragraph of this specification would manifest itself in heat. This heat would cause the temperature of the bearing fluid to be higher within pads 64 and 70, and much higher within the clearances surrounding them, than at the source 108. The fluid within the pads, and especially within the surrounding clearances, will therefore be less viscous than on leaving the source 108. Because they are of appreciable width, the clearances to either side of pad 70 each have a resistance that is a function of the viscosity of the fluid. When that viscosity falls, therefore, as a result of a temperature rise as just described, the resistance of the pilot bearing falls although there may have been no change of bearing load. Therefore the pressure within pilot pad 70 will fall also, and this reduced pressure will be communicated by way of equalising valve 72 to main pad 64. Therefore the height of the bearing clearance, which should remain constant, will tend to fall, and so to restore the pressures in pilot pad 70 and consequently in main pad 64 to what they were before the rise in temperature. The magnitude of the pressure so restored is what is required to balance the load on the main pad. The bearing will therefore stabilise in a condition in which the clearance at the main pad is less than what is intended. Hence, in such a bearing valve 106 would fail to keep the main pad clearance constant.

The present invention seeks to provide a fluid bearing that can maintain constant clearance despite variations of bearing load, but is less susceptible to changes in clearance as a result of temperature and viscosity effects as just described. According to the invention, a fluid bearing comprises at least one main load-bearing pad associated with at least one pilot pad, in which there are means to supply the main pad with fluid at a pressure related to that existing in the pilot pad, in which there is a restrictor between the source and the pilot pad, and in which the pilot pad presents a mouth formed on one of the members and arranged to confront the other member so that fluid leaves the pilot pad by passing out of the mouth through a clearance between the two members which forms a continuous border around that mouth, and the invention is characterised in that the clearance is defined between a sharp edge presented by one of the members and arranged with the apex of the edge pointing towards the other member whereby the restriction presented by the clearance to the passage of fluid through it is of sharp-edged or "orifice" type.

The restrictor may be a constant one, so that the bearing clearance will vary in response to changes in bearing load, although by good design such variations may be minimised. Alternatively, the restrictor may be of the kind that automatically opens or closes in response to the clearance at the pilot pad respectively closing or opening, whereby controlling the flow of fluid to the main pad so as to tend to stabilize the bearing clearance against changes in bearing load. The restrictor may, for instance, be of the diaphragm-controlled kind described in UK Patent No. 1027395.

The bearing may comprise more than one main pad, mounted in one member of the bearing so as to confront the other bearing member in opposed directions and operating so as to stabilize the second member against movement in either direction along a given axis. In this case the pilot pads may be associated with only one main bearing pad, the pressure in the other main pad or pads being a function of the supply pressure and of the pressure in the first main pad.

The invention is defined by the claims and will now be described by way of example, with reference to the further accompanying drawings in which:-

Figure 2 is a diagrammatic section through a flat bearing:

Figure 3 is a detail from Figure 2 on a enlarged scale, and

Figure 4 is a diagrammatic radial section through a two-pad journal bearing.

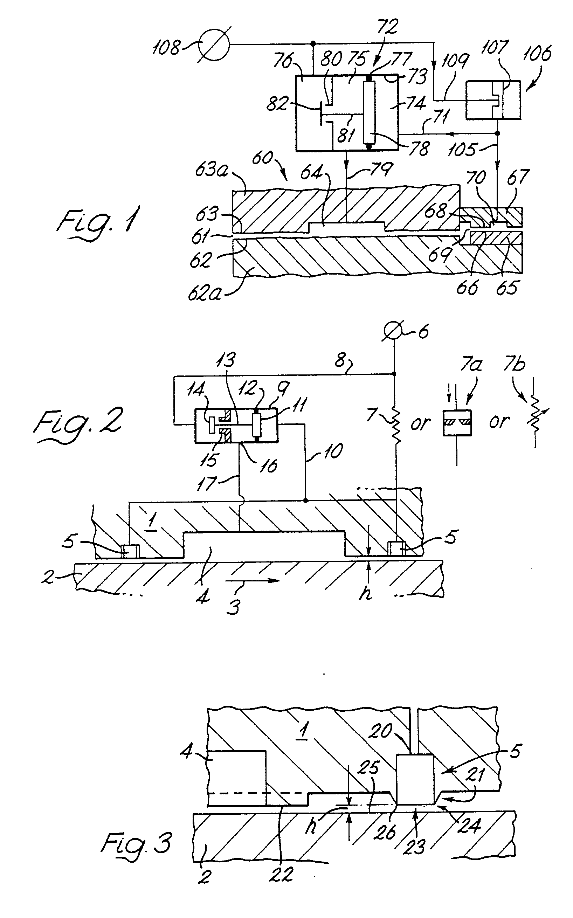

The bearing of Figure 2 comprises a stationary member 1 and a second member 2 movable in the direction of arrow 3. A main load-bearing pad 4 and two associated pilot pads 5 are mounted in member 1, and a pressure fluid source 6 is connected to pilot pads 5 by way of a fixed restrictor 7 of viscous type. Source 6 is also connected by fluid line 8 to one end of an equalising valve 9, the other end of which is connected to fluid line 10 and so to fluid at the pressure existing within pilot pads 5. Valve 9 is of known type comprising a piston 11 carrying a flexible "0"-ring seal 12 which maintains sealing contact against the wall of the housing while piston 11 makes limited axial movement. Piston 11 also carries a shaft 13 and a valve member 14. As piston 11 moves, the gap varies between member 14 and a fixed ring 15. Fluid entering valve 9 by way of line 8 undergoes a pressure drop passing through the gap, and piston 11 seeks a position in which that pressure drop is such that the piston is at rest, with equal pressure to either side of it. Fluid entering the main pad 4 from valve 9 by way of outlet 16 and line 17 therefore tends to be at the same pressure as the fluid within pilot pads 5.

One of pilot pads 5 is shown on an enlarged scale in Figure 3. Fluid enters the pad from the source 6 and resistor 7 by way of inlet 20, and a raised land 21 forms a continuous border around the mouth 23 of the pad. The clearance 24 between the tip of this land and the confronting face 25 of member 2 represents the effective clearance (of magnitude h) of the bearing, and is of the same dimension as the clearance between face 25 and the land 22 of the associated main pad 4 although it is also possible for the clearances at the main and associated pilot pads to be different and the invention applies equally to such bearings. While land 22, for practical reasons including bearing stiffness, is of considerable width when measured in the plane of relative movement of members 1 and 2, it is particularly to be noted that land 21 is as narrow as is practically possible. In Figure 3 the land is in fact shown as tapering to a knife edge 26. The restriction that fluid has to pass from pilot pads 5 through the clearance between land 21 and member 2 is therefore of sharp-edges or "orifice" type, so that by known theory its resistance is determined by the equation:-

$$\frac{1}{R} = \frac{Q}{p} = C_d \cdot \frac{A}{\sqrt{\dfrac{P}{2} \cdot \rho}}$$

where A is the product of h and the peripheral length of the pilot pad, R is the pad resistance, Q is the flow through the pad, $C_d$ is a constant, $\rho$ is the density of the fluid and p is the pad recess pressure. The resistance R is thus independent of the viscosity of the fluid. It follows that if the viscosity of the bearing fluid in the vicinity of pilot pads 5 varies because of heat generated by shearing friction due to the high relative velocity of members 1 and 2, the pressure within pads 5 will not change and therefore the equal pressure within main load-carrying pad 4 will not change either.

Where restrictor 7 is a fixed, viscous restrictor as already described, the bearing of Figures 2 and 3 will be substantially insensitive to changes in viscosity of the bearing fluid. As to stability against variation of bearing load, the combination of at least one pilot pad with the main pad has several advantages compared with simply connecting main pad 4 to source 6 by way of resistor 7. For instance, the pilot pad can be arranged as in Figure 1 to follow the accurately flat surface 66 of a rail 65 whilst the surface (62, Figure 1) confronting the associated main pad can be of much less accuracy. If a sharp-edged orifice-type restrictor 7a were substituted for 7, the potential advantage would be that performance of the bearing would be less subject to changes in ambient temperature, which would affect the bearing fluid temperature and viscosity not just in the pads but elsewhere in the circuit also. As another alternative, viscous restrictor 7 could be replaced by a variable restrictor (shown diagrammatically at 7b) which tends to open or else automatically according as to whether the pressure in pad 5 respectively rises or falls. Item 7b could, for instance, be a diaphragm-controlled restrictor of the kind described in UK Patent No. 1027395 but could also be an automatically-operative valve of viscous, sharp edged or other more conventional type. With such a restrictor the bearing could be substantially stable not only against temperature variations of the fluid in the vicinity of pads 4 and 5, but also against a change in bearing load. Any such change would result in an alteration of pressure at pads 4 and 5, tending to maintain clearance h constant despite the change.

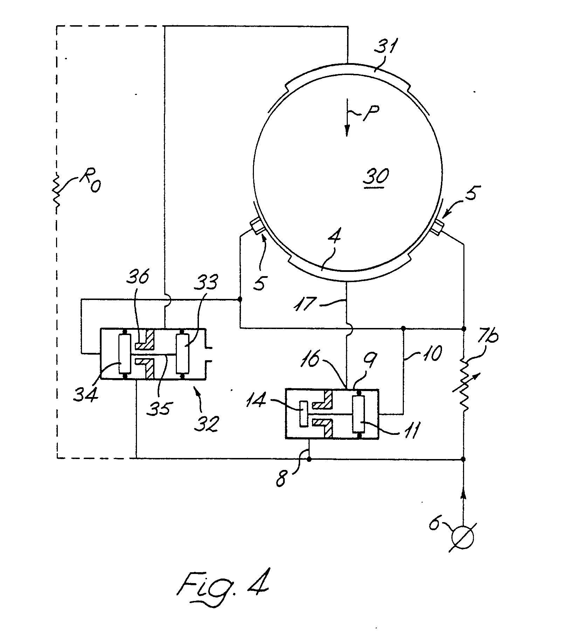

In Figure 4, parts similar to those already described with reference to Figures 2 and 3 are similarly numbered. Figure 4 however shows a journal bearing in which a horizontal, fast-spinning shaft 30 is held against either upwards or downwards vertical movement by main pad 4 (with associated pilot pads 5), and an associated and oppositely-directed main pad 31. Constant clearance between shaft 30 and the lands of pads 4, 31 is maintained by having an automatically variable valve 7b, with constructional options and mode of operation as already described, in the line between source 6 and pilot pads 5. In addition to equalising valve 9, which works as before, the circuit now includes an adding valve 32 of known type, comprising two pistons 33, 34 joined by a shaft 35. Piston 34 also acts as a valve member relative to an orifice plate 36, and movement of the piston assembly 33—35 varies the gap between the valve member and the plate and so imposes a variable pressure drop upon fluid passing through that gap. It will readily be seen that the connections of valve 32 to source 6, pilot pads 5 and main pad 31 are such that piston assembly 33—35 seeks a position in which the pressure at pad 31 equals the difference between the pressure at pilot pads 5 (and therefore at main pad 4 also) and source pressure. For reasons already explained, this difference should be substantially independent of the temperature and viscosity of the bearing fluid and will act so as to oppose any tendency for the clearances between shaft 30 and the lands of pad 4, 31 to vary in response to changes of the resultant vertical force P exerted by the shaft. Performance may be further enhanced by including a constant restrictor $R_o$, of viscous or orifice or other suitable type, in the circuit as indicated by broken lines.

**Claims**

1. A fluid-bearing comprising at least one main load-bearing pad (4) associated with at least one pilot pad (5), in which there are means (6, 9, 10, 17) to supply at least one main pad with fluid at a pressure related to that existing in an associated pilot pad, in which there is a restrictor (7) between the source and that pilot pad, and in which the pilot pad presents a mouth (23) formed on one of the members (1) and arranged to confront the other member (2) so that fluid leaves the pilot pad by passing out of the mouth (23) through a clearance (24) between the two members which forms a continuous border around that mouth, characterised in that the clearance (24) is defined between a sharp edge (26) presented by one of the members (1) and arranged with the apex of the edge pointing towards the other member (2) whereby the restriction presented by the clearance to the passage of fluid through it is of sharp-edged or "orifice" type.

2. A fluid bearing according to Claim 1, characterised in that the restrictor (7, 7a) is constant.

3. A fluid bearing according to Claim 1, characterised in that the restrictor (7b, Figures 3, 4) is of the kind that automatically opens or closes in response to the clearance (24) at the associated pilot pad respectively closing or opening, whereby controlling the flow of fluid to the associated pad so as to tend to stabilize the bearing clearance against changes in bearing load.

4. A fluid bearing according to Claim 3 characterised in that the restrictor is of diaphragm-controlled type.

5. A fluid bearing according to Claim 1 characterised in that it comprises more than one main pad (4, 31, Figure 4) mounted in one member of the bearing so as to confront the other bearing member in opposed directions and operating so as to stabilize the second member against movement in either direction along a given axis.

6. A fluid bearing according to Claim 5 characterised in that the pilot pads (5) are associated with only one such main bearing pad (4), the pressure in the other main pad (31) or pads being a function of the pressure of the supply (6) and of the pressure in the first main pad (4).

## Patentansprüche

1. Flüssigkeitslager mit mindestens einer lasttragenden Hauptkammer (4), die mindestens einer Pilotkammer (5) zugeordnet ist, wobei Mittel (6, 9, 10, 17) zur Speisung mindestens einer Hauptkammer mit Flüssigkeit unter einem Druck vorgesehen sind, der zu demjenigen in einer zugeordneten Pilotkammer in Beziehung steht, wobei weiter eine Drossel (7) zwischen der Quelle und der Pilotkammer vorgesehen ist und wobei die Pilotkammer eine in einem der Lagerteile (1) gebildete Mündungsöffnung (23) darstellt, die dem anderen Lagerteil (2) zugewandt ist, so daß Flüssigkeit die Pilotkammer durch Austritt aus der Mündungsöffnung (23) durch einen Spalt (24) zwischen den beiden Lagerteilen verläßt, der eine ununterbrochene Ungrenzung der Mündungsöffnung bildet, dadurch gekennzeichnet, daß der Spalt (24) zwischen einer scharfen Kante (26) gebildet ist, die an einem der Lagerteile (1) geformt ist und mit ihrem Kantenscheitel zum anderen Lagerteil (2) hinweist, so daß die durch den Spalt dargestellte Drossel für den Flüssigkeitsdurchtritt dem scharfkantigen bzw. "Mündungs"-Typ angehört.

2. Flüssigkeitslager nach Anspruch 1, dadurch gekennzeichnet, daß die Drossel (7, 7a) konstant ist.

3. Flüssigkeitslager nach Anspruch 1, dadurch gekennzeichnet, daß die Drossel (7b, Fig. 3, 4) der Bauart angehört, die in Abhängigkeit vom Verengen oder Erweitern des Spalts (24) der zugeordneten Pilotkammer automatisch öffnet oder schließt, derart, daß die Steuerung der Flüssigkeitsströmung zur zugeordneten Kammer im Sinne einer Stabilisierung des Lagerspalts gegen Änderungen der Lagerbelastung erfolgt.

4. Flüssigkeitslager nach Anspruch 3, dadurch gekennzeichnet, daß die Drossel der membrangesteuerten Bauart angehört.

5. Flüssigkeitslager nach Anspruch 1, dadurch gekennzeichnet, daß es mehr als eine Hauptkammer (4, 31, Fig. 4) aufweist, die in einem Lagerteil so angeordnet sind, daß sie dem anderen Lagerteil in entgegengestzten Richtungen zugewandt sind, und die so arbeiten, daß sie das zweite Lagerteil gegen Verschiebung in irgendeiner Richtung entlang einer gegebenen Achse stabilisieren.

6. Flüssigkeitslager nach Anspruch 5, dadurch gekennzeichnet, daß die Pilotkammern (5) nur einer solchen Hauptkammer (4) zugeordnet sind, und daß der Druck in der anderen Hauptkammer (31) oder Hauptkammern eine Funktion des Druckes der Speisequelle (6) und des Druckes in der ersten Hauptkammer (4) ist.

## Revendications

1. Palier à fluide comprenant au moins un patin principal (4) de support de force associé à au moins un patin pilote (5) lequel un dispositif (6, 9, 10 17) est destiné à transmettre à au moins un patin principal, du fluide à pression reliée à celle que existe dans un patin pilote associé, dans lequel un organe (7) de rétrécissement est placé entre la source et ce patin pilote, et en ce que le patin pilote présente une embouchure (23) formée sur l'un des organes (1) et destinée à être en face de l'autre organe (2) afin que du fluide quitte le patin pilote par sortie par l'embouchure (23) par un espace (24) formé entre les deux organes et qui constitue une limite continue autour de cet organe, caractérisé en ce que l'espace (24) est délimité par un bord effilé (26) présenté par l'un des organes (1) et disposé de manière que le sommet du bord soit tourné vers l'autre organe (2), si bien que le rétrécissement présenté par l'espace et résistant à la circulation du fluide est du type à bord effilé ou à "orifice".

2. Palier à fluide selon la revendication 1, caractérisé en ce que l'organe (7, 7a) de rétrécissement est de type constant.

3. Palier à fluide selon la revendication 1, caractérisé en ce que l'organe de rétrécissement (7b, figures 3, 4) est du type que s'ouvre ou se ferme automatiquement lorsque l'espace (24) du patin pilote associé se ferme ou s'ouvre respectivement, si bien que le débit de fluide transmis au patin associé est réglé de manière que l'espace du palier ait tendance à être stabilisé malgré les variations de la force appliquée au palier.

4. Palier à fluide selon la revendication 3, caractérisé en ce que l'organe de rétrécissement est du type commandé par un diaphragme.

5. Palier à fluide selon la revendication 1, caractérisé en ce qu'il comporte plusieurs patins principaux (4, 31, figure 4) montés sur un premier organe du palier afin qu'ils soient en face de l'autre organe du palier, dans des sens opposés, et assurant la stabilisation du second organe contre les déplacements dans les deux sens suivant un axe donné.

6. Palier à fluide selon la revendication 5, caractérise en ce que les patins pilotes (5) sont associés à un seul des patin principaux (4), la pression dans l'autre patin principal (31) ou les autres patins étant fonction de la pression d'alimentation (6) et de la pression dans le premier patin principal (4).

Fig. 1

Fig. 2

Fig. 3

1

Fig. 4